(19)

Europäisches Patentamt

European Patent Office

Office européen des brevets

(11) **EP 4 550 210 A1**

(12) **EUROPEAN PATENT APPLICATION**

(43) Date of publication:
07.05.2025 Bulletin 2025/19

(21) Application number: 24199622.2

(22) Date of filing: 11.09.2024

(51) International Patent Classification (IPC):
*G06N 3/044* (2023.01)    *G06N 3/0455* (2023.01)

(52) Cooperative Patent Classification (CPC):
G06N 3/044; G06N 3/0455

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 02.11.2023 IN 202321074788

(71) Applicant: Tata Consultancy Services Limited
Maharashtra (IN)

(72) Inventors:
• ACHAR, AVINASH
600113 Chennai, Tamil Nadu (IN)

• PACHAL, SOUMEN
600113 Chennai, Tamil Nadu (IN)
• BHUTANI, NANCY
110001 New Delhi, Delhi (IN)
• DAS, AKASH
700160 Kolkata, West Bengal (IN)
• BANIK, SUBHADEEP
700156 Kolkata, West Bengal (IN)

(74) Representative: Goddar, Heinz J.
Boehmert & Boehmert
Anwaltspartnerschaft mbB
Pettenkoferstrasse 22
80336 München (DE)

(54) **METHOD AND SYSTEM FOR TIME SERIES FORECASTING INCORPORATING SEASONAL CORRELATIONS USING SCALABLE ARCHITECTURE**

(57)    The disclosure herein relates to a method and system for time series forecasting incorporating seasonal correlations using scalable architecture. The scalable architecture comprises parallel encoders, a neural network layer and a decoder. The neural network layer is either an attention layer or RNN layer. Each of the encoders and the decoder comprises multiple sequential encoder and decoder units, respectively. The parallel encoders encode seasonal correlations in a time series to generate summary vectors which are then processed along with state of a previous decoder unit by the neural network layer to generate a feature vector whose size is independent of order of seasonality of the time series. The feature vector is then processed by a next decoder unit to forecast a seasonal time series data at a subsequent time step. This process is repeated for all the decoder units to train the deep neural network model for time series forecasting.

FIG. 2

EP 4 550 210 A1

**Description**

CROSS-REFERENCE TO RELATED APPLICATIONS AND PRIORITY

The present application claims priority to Indian application no. 202321074788, filed on November 2, 2023.

TECHNICAL FIELD

The disclosure herein generally relates to the field of time series forecasting, and, more particularly, to a method and system for time series forecasting incorporating seasonal correlations using a scalable architecture.

BACKGROUND

Time series forecasting is an approach used to predict future data based on past or historical data. Data is a real-valued time series with sequential time steps. It can be one long time-series or a collection of related multiple time-series (typically short). The forecasting problem involves predicting one or more endogenous variables over a multi-step forecast horizon in presence of potential exogenous inputs which affect the endogenous variables. This problem manifests in many applications. For instance, in electricity markets, power demand (endogenous) forecasting in different geographical regions by considering temperature influences or fluctuations (exogenous) is an important problem. Forecasting one or more product sales or demand (modelled as endogenous variables) in the presence of exogenous price variation would be of interest in sectors like retail, CPG (Consumer Packaged Goods) etc. Such demand prediction models under exogenous price influences can potentially be further utilized for price optimization towards maximizing profits for instance.

Deep learning (DL) based approaches have been extensively used for time series forecasting. Existing DL works have several drawbacks such as: (i) some of the works consider an encoder-decoder (ED) approach for multi-step time-series prediction with exogenous inputs without incorporating stochastic seasonal correlations or naively incorporating seasonal correlations which makes them prone to vanishing gradients, (ii) some other works use many-to-many Recurrent Neural Network (RNN) architecture with poor multi-step predictive ability, (iii) few works incorporate stochastic seasonal correlations using additional skip connections via a non-ED predictive approach, but suffer from poor multi-step predictive ability and vanishing gradients, (iv) some of the approaches capture deterministic seasonality (additive periodic components) in time-series using a Fourier basis in an overall feed-forward DL framework, (v) some other works use attention-based approach where seasonal influences are also learnt from data, but they are prone to serious scalability and vanishing gradient issues. One of the prior art references (Indian patent application 202121009109) addresses some of the mentioned drawbacks by using multiple parallel encoders depending on the order of seasonality. The outputs from the parallel encoders are appended to form a single vector which is then fed into a decoder. However, this results in a large dimensional combined vector dependent on the order of seasonality and processing such a large dimensional combined vector increases time and model complexity.

SUMMARY

Embodiments of the present disclosure present technological improvements as solutions to one or more of the above-mentioned technical problems recognized by the inventors in conventional systems. For example, in one embodiment, a method for time series forecasting incorporating seasonal correlations using a scalable architecture is provided. The method includes obtaining a seasonal time series data for a plurality of sequential time steps. The seasonal time series data is divided into a plurality of groups of seasonal lags. Further, the method includes training a deep neural network architecture using the seasonal time series data. The deep neural network comprises a) a plurality of encoders, b) a neural network layer and c) a decoder comprising a plurality of sequential decoder units. Training the deep neural network architecture comprises of iteratively performing for each of the plurality of sequential decoder units: generating a plurality of summary vectors pertaining to the plurality of groups of seasonal lags using the plurality of encoders. Each of the plurality of summary vectors encodes seasonal correlations among each of the plurality of groups of seasonal lags. The training further comprises generating a feature vector by processing the plurality of summary vectors and a state of a previous decoder unit among the plurality of sequential decoder units using the neural network layer and feeding the feature vector and previous group of seasonal lags into a current decoder unit among the plurality of sequential decoder units to predict a seasonal time series data at a subsequent time step.

In another aspect, a system for time series forecasting incorporating seasonal correlations using a scalable architecture is provided. The system includes a memory storing instructions; one or more communication interfaces; and one or more hardware processors coupled to the memory via the one or more communication interfaces, wherein the one or more hardware processors are configured by the instructions to: obtain a seasonal time series data for a plurality of sequential time steps. The seasonal time series data is divided into a plurality of groups of seasonal lags. Further, the one or more hardware processors are configured to train a deep neural network architecture using the seasonal time series data. The deep neural network comprises a) a plurality of encoders, b) a neural network layer and c) a decoder comprising a plurality of sequential decoder units. Training the deep neural network architecture comprises of iteratively performing for each of the plurality of sequential decoder units: generating a plurality of summary vectors pertaining to the plurality of groups of seasonal lags using the plurality of encoders. Each of the plurality of summary vectors encodes seasonal correlations among each of the plurality of groups of seasonal lags. The training further comprises generating a feature vector by processing the plurality of summary vectors and a state of a previous decoder unit among the plurality of sequential decoder units using the neural network layer and feeding the feature vector and previous group of seasonal lags into a current decoder unit among the plurality of sequential decoder units to predict a seasonal time series data at a subsequent time step.

In yet another aspect, there are provided one or more non-transitory machine-readable information storage mediums comprising one or more instructions which when executed by one or more hardware processors cause a method for time series forecasting incorporating seasonal correlations using scalable architecture. The method includes obtaining a seasonal time series data for a plurality of sequential time steps. The seasonal time series data is divided into a plurality of groups of seasonal lags. Further, the method includes training a deep neural network architecture using the seasonal time series data. The deep neural network comprises a) a plurality of encoders, b) a neural network layer and c) a decoder comprising a plurality of sequential decoder units. Training the deep neural network architecture comprises of iteratively performing for each of the plurality of sequential decoder units: generating a plurality of summary vectors pertaining to the plurality of groups of seasonal lags using the plurality of encoders. Each of the plurality of summary vectors encodes seasonal correlations among each of the plurality of groups of seasonal lags. The training further comprises generating a feature vector by processing the plurality of summary vectors and a state of a previous decoder unit among the plurality of sequential decoder units using the neural network layer and feeding the feature vector and previous group of seasonal lags into a current decoder unit among the plurality of sequential decoder units to predict a seasonal time series data at a subsequent time step.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for time series forecasting incorporating seasonal correlations using a scalable deep neural network architecture, according to some embodiments of the present disclosure.
FIG. 2 illustrates a flow diagram of a processor implemented method for time series forecasting incorporating seasonal correlations using the scalable deep neural network architecture, according to some embodiments of the present disclosure.
FIG. 3 illustrates a block diagram of encoders and RNN layer comprised in the scalable deep neural network architecture, according to some embodiments of the present disclosure.
FIG. 4 illustrates a block diagram of encoders and attention layer comprised in the scalable deep neural network architecture, according to some embodiments of the present disclosure.
FIG. 5 illustrates a block diagram of decoder comprised in the scalable deep neural network architecture, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Time series forecasting has applications in many areas and deep learning based approaches have been extensively used for time series forecasting. However, existing methods have several drawbacks such as rightly incorporating seasonal correlations which makes them prone to vanishing gradients thereby affecting accuracy of the time series forecasting. One of the prior art references (Indian patent application 202121009109) addresses some of the drawbacks by using multiple parallel encoders depending on the order of seasonality. The outputs from the parallel encoders are appended to form a single vector which is then fed into a decoder. However, this results in a large dimensional combined vector dependent on the order of seasonality and processing such a large dimensional combined vector increases time and model complexity. Thus, there are 2 main technical challenges in conventional methods. The first challenge is to encode the summary vectors obtained from each cycle into a vector (without discarding any information) whose dimension doesn't grow with P, the order of seasonality. This is needed because only then the number of parameters in the decoder unit will not grow with order of P. The second challenge is to make the encoding (summary vector) context dependent for improving the accuracy of prediction.

In order to overcome the aforementioned technical challenges in state of the art techniques, embodiments of present disclosure provide a method and system for time series forecasting incorporating seasonal correlations using a scalable architecture. The scalable architecture is a deep neural network architecture (alternatively referred as deep neural network model, scalable model, and the like) comprising multiple parallel encoders, a neural network layer and a decoder. Each of the encoders and the decoder comprises multiple sequential encoder units and decoder units, respectively. The seasonal time series data is first processed through multiple parallel encoders to incorporate or encode the seasonal correlations in the data. Further, outputs from the encoders are processed along with state of a previous decoder unit using a neural network layer to generate a feature vector using the neural network layer. The feature vector is then processed by a next decoder unit to forecast a seasonal time series data at a subsequent time step. This process is repeated for all the decoder units to train the deep neural network model for time series forecasting. The neural network layer processes the output from encoders to generate a feature vector whose dimension is independent of order of seasonality. Further, by feeding the state of the previous decoder unit, the feature vector is made context dependent. Thus the trained deep neural network is able to make more accurate predictions than conventional approaches. The deep neural network is scalable since number of encoder units and decoder units can be increased or decreased according to the order of seasonality in the seasonal time series data. Further, since the feature vector is independent of order of seasonality, model complexity and time complexity of the deep neural network is lesser than that of the prior arts.

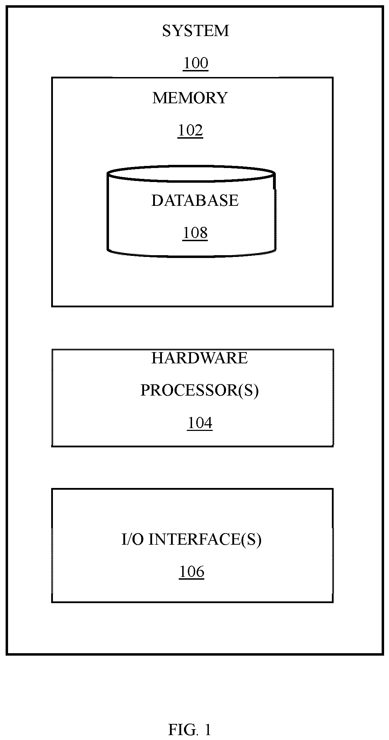

Referring now to the drawings, and more particularly to FIGS. 1 to 5, where similar reference characters denote corresponding features consistently throughout the figures, there are shown preferred embodiments and these embodiments are described in the context of the following exemplary system and/or method.

FIG. 1 illustrates an exemplary block diagram of a system for time series forecasting incorporating seasonal correlations using a scalable deep neural network architecture, according to some embodiments of the present disclosure. In an embodiment, the system 100 includes one or more processors (104), communication interface device(s) (106) or Input/Output (I/O) interface(s) (106) or user interface (106), and one or more data storage devices or memory (102) operatively coupled to the one or more processors (104). The one or more processors (104) that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

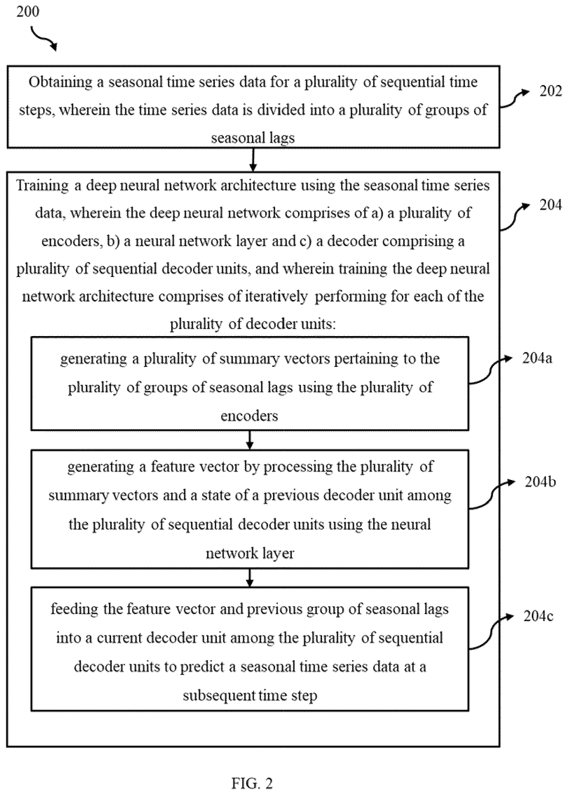

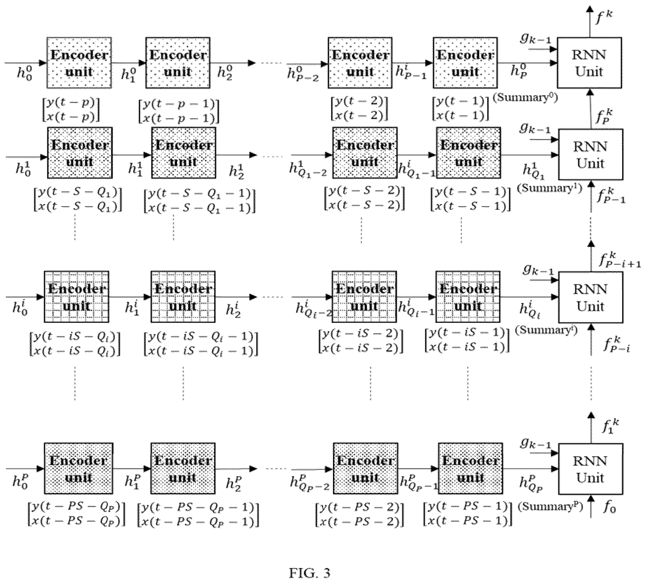

The I/O interface device(s) (106) can include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface device(s) (106) receives seasonal time series data at past time steps (historical data) as input and provides seasonal time series data prediction for future time steps as output. The memory (102) may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The database 108 may store information but not limited to information associated with at least one of: input seasonal time series data, predicted time series data, trained neural network model parameters and so on. Further, the database 108 stores information pertaining to inputs fed to the system 100 and/or outputs generated by the system (e.g., at each stage), specific to the methodology described herein. Functions of the components of system 100 are explained in conjunction with flow diagram depicted in FIG. 2 and block diagrams of FIGS. 3 to 5 for time series forecasting incorporating seasonal correlations using the scalable architecture.

In an embodiment, the system 100 comprises one or more data storage devices or the memory (102) operatively coupled to the processor(s) (104) and is configured to store instructions for execution of steps of the method (200) depicted in FIG. 2 by the processor(s) or one or more hardware processors (104). The steps of the method of the present disclosure will now be explained with reference to the components or blocks of the system 100 as depicted in FIG. 1, the steps of flow diagrams as depicted in FIG. 2 and block diagrams of FIGS. 3 to 5. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

FIG. 2 is a flow diagram of a method 200 for time series forecasting incorporating seasonal correlations using the scalable deep neural network architecture, according to some embodiments of the present disclosure. At step 202 of the method 200, the one or more hardware processors 104 are configured to obtain a seasonal time series data for a plurality of sequential time steps. Seasonal time series data means that there are periodic fluctuations in the data. For example, the seasonal time series data comprises number of products sold at different periods in a year. It may increase during a particular time of the year such as when there is a discount sale or during festival time. Another example of seasonal time series data electricity consumption in a household at different months of a year. In hot and humid areas, electricity consumption may increase during summer season due to use of fans and/or air conditioners.

The seasonal time series data is divided into a plurality of groups of seasonal lags as given by equation 1. In equation 1, $y(t)$ represents the seasonal time series data which is a function of groups of seasonal lags mentioned within square brackets. For example, the seasonal time series data comprises of number of products sold each day for 10 years. Suppose a discount sale happens for 10 days in October every year and large number of products are sold during this period. In order to forecast number of products that will be sold during the discount sale in 11th year, data from the discount sale period (10 days in October) every year is considered i.e. 10 days sales in $10^{th}$ year, $9^{th}$ year and so on. Since yearly data is considered for forecasting, the seasonal lag is 365 days. Further, suppose instead of considering all 10 years data for training, only seasonal lags up to 5 years behind are considered, then the order of seasonality is 5.

$y(t) = F([x(t), x(t - 1), y(t - 1), ....,x(t - p), y(t - p), y(t -p)], [x(t - S), y(t - S), ... , x(t - PS), y(t - S)], [x(t - S - 1), y(t - S - 1), y(t - S -1), ... , y(T - S - Q_1)], .... , [x(t - PS - 1), y(t - PS - 1), ..., y(t - PS - O_P)]$

Further, at step 204 of the method 200, the one or more hardware processors 104 are configured to train a deep neural network architecture using the seasonal time series data. The deep neural network comprises of a) a plurality of encoders, b) a neural network layer and c) a decoder comprising a plurality of sequential decoder units. Each of the plurality of encoders comprises of a plurality of sequential encoder units. The number of encoders is determined by the order of seasonality (P) of the seasonal time series data. This implies that the number of encoders can be increased or decreased according to the order of seasonality thereby making the deep neural network scalable with the order of seasonality. In an embodiment, the neural network layer is an attention layer. In another embodiment, the neural network layer is a Recurrent Neural Network (RNN) layer comprising a number of RNN units equal to the number of groups of seasonal lags.

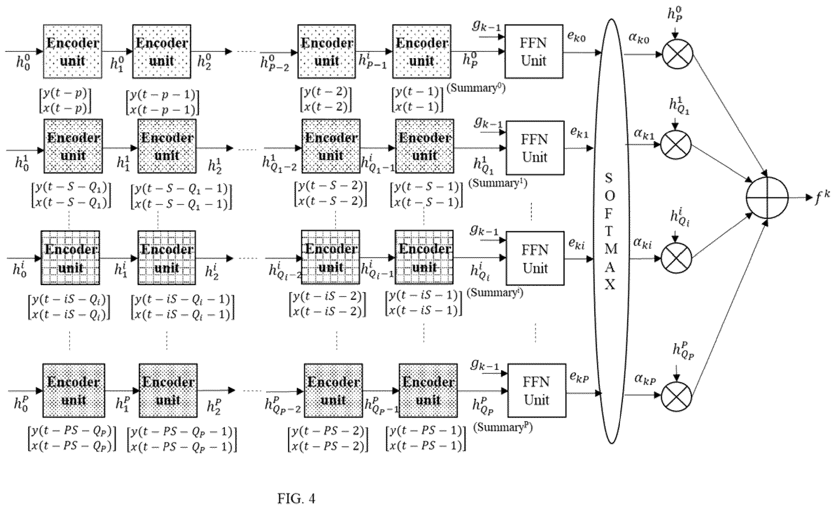

Training the deep neural network architecture comprises iteratively performing steps 204a to 204c for each of the plurality of decoder units. At step 204a, a plurality of summary vectors pertaining to the plurality of groups of seasonal lags are generated using the plurality of encoders. The first group of seasonal lags in equation 1 represent standard or immediate consecutive lags of order $p$. These are fed as input to the first encoder, as illustrated in FIGS. 3 and 4, followed by $P$ groups of seasonal lags, where $i^{th}$ such group is a bunch of $Q_i$ consecutive lags starting exactly $iS$ lags behind time $t$ - 1. $S$ represents a period (for example, weekly, yearly) over which the influence of seasonal lags are captured. Thus, the number of encoders depend on the order P (i. e. order of seasonality) of the model. This ensures that there is equal emphasis from seasonal lags of all orders during model building. Past exogenous inputs or observations associated with the seasonal time series data are also fed at these various encoder units corresponding to different time steps. The plurality of summary vectors are obtained at the last encoder unit of the $P$ encoders. Each summary vector captures one or more seasonal correlation among the group of seasonality lag fed as input to the corresponding encoder. As illustrated in FIGS. 3 and 4, $h_P^0, h_{Q_1}^1,..., h_{Q_i}^i,..., h_{Q_P}^P$ are the summary vectors.

Further, at step 204b, a feature vector is generated by processing the plurality of summary vectors and a state of a previous decoder unit among the plurality of sequential decoder units using the neural network layer. In an embodiment, the neural network layer is a Recurrent Neural Network (RNN) layer comprising a number of RNN units equal to the number of groups of seasonal lags. FIG. 3 illustrates a block diagram of the plurality of encoders and the RNN layer comprised in the scalable neural network architecture, according to some embodiments of the present disclosure. When the training occurs at a $k^{th}$ decoder unit, then, along with summary vectors, state of $(k-1)^{th}$ decoder unit that is represented by $g_{k-1}$ is given as input to the RNN units for generating the feature vector $f^k$ according to equations 2 to 5. In the equations 2 to 5, $k$ denotes the $k^{th}$ decoder unit, $P$ is order of seasonality, $\oplus$ denotes concatenation operation, $\sigma$ denotes sigmoid activation function, $W_r$, $U_r$, $W_u$, $U_u$, $W_c$ and $U_c$ are weight matrices of the RNN units and $b_r$, $b_u$ and $b_c$ are bias vectors of the RNN units.

$$r_{ik} = \sigma\left(W_r.\left(g_{k-1} \oplus summary^{(P+1-i)}\right) + U_r f_{i-1}^k + b_r\right).....(2)$$

$$u_{ik} = \sigma\left(W_u.\left(g_{k-1} \oplus summary^{(P+1-i)}\right) + U_u f_{i-1}^k + b_u\right).....(3)$$

$$c_{ik} = tanh\left(W_c.\left(g_{k-1} \oplus summary^{(P+1-i)}\right) + U_c\left(r_{ik}.f_{i-1}^k\right) + b_c\right).....(4)$$

$$f_i^k = u_{ik}.f_{i-1}^k + (1 - u_{ik}).c_{ik}.....(5)$$

In another embodiment, the neural network layer is an attention layer. FIG. 4 illustrates a block diagram of the plurality of encoders and the attention layer comprised in the neural network architecture, according to some embodiments of the present disclosure. As illustrated in FIG. 4, the attention layer further comprises of a plurality of Feed Forward Network (FFN) units and a SoftMax layer. Outputs $\alpha_{k0}, \alpha_{k1},..., \alpha_{ki},..., \alpha_{kP}$ from the softmax layer are multiplied with respective context vectors and the resulting products are summed up to get the feature vector. Thus, the feature vector $f^k$ that is input at the $k^{th}$ step of the decoder (i.e. at the $k^{th}$ decoder unit) is a convex combination of the summary vectors obtained as the last state from each of the plurality of encoders according to equation 6, where the attention weights $\alpha_{ij}$ are computed as output of the SoftMax layer according to equation 7. In equation 7, $e_{kj}$ captures importance of $j^{th}$ cycle (alternatively referred as time step) summary $h_j$ as given by equation 8.

$$f_k = \sum_{j=0}^{P} \alpha_{kj} h_j.....(6)$$

$$\alpha_{kj} = \frac{exp\left(e_{kj}\right)}{\sum_{j'=0}^{P} exp\left(e_{kj'}\right)}.....(7)$$

$$e_{kj} = a\left(g_{k-1}, h_j\right) = v_a^T \sigma\left(W_a g_{k-1} + U_a h_j\right).....(8)$$

In equation 8, $a$ is the feed-forward network (indicated as FFN in the FIG. 4) with weights $W_a$, $U_a$ and $V_a$, all of which are invariant with $k$ or $j$. Thus, the attention mechanism enables the decoder to focus on specific cycles of the input window at each step of the forecast horizon (output window). Instead of trying to focus amongst a huge number of time steps which will extend across P cycles of period S, embodiments of the present disclosure focus on a coarser level, namely at the cycle level.

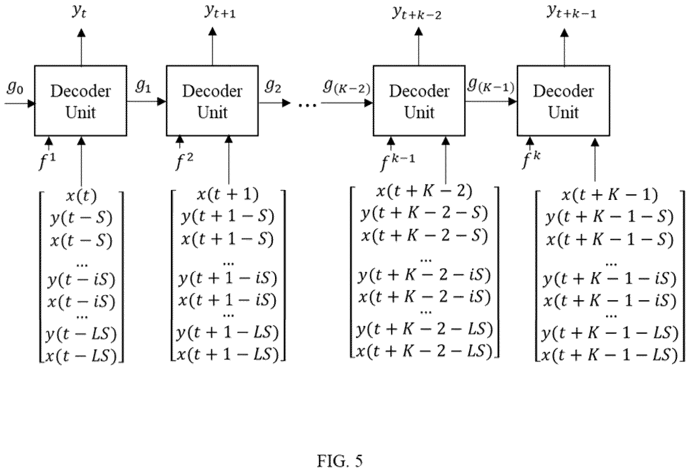

Once the feature vector is generated, at step 204c, the feature vector and previous group of seasonal lags (i.e. (k-1)$^{th}$ group of seasonal lag) is fed into a current decoder unit (i.e. $k^{th}$ decoder unit) among the plurality of sequential decoder units (as illustrated in FIG. 5) to predict a seasonal time series data at a subsequent time step. The steps 204b and 204c are repeated for every decoder unit among the plurality of decoder units for training the deep neural network architecture for time series forecasting. The trained deep neural network is then used to forecast values for future time steps.

EXPERIMENTAL RESULTS: For experimentation purpose, the deep neural network model of present disclosure and the model disclosed in the patent application 202121009109 were trained using M5 Dataset which contains sales data for 1941 days (Data of nearly 5.4 years) of different products (3049) sold in 10 stores scattered across 3 states. Experiments were performed using sequences which provided aggregate sales information of each product across all stores and states. Given 3049 unique products there are 3049 single sequences at this aggregation level. Total Variation screening method was used to extract 3 sequences with sufficient total variation. They were tested by predicting the sales of 3 items for next 10, 15, 20 and 25 days. So the prediction horizon is 10, 15, 20 and 25 respectively. Mean absolute percentage error (MAPE) of the predictions were calculated to determine the accuracy of forecast.

Table 1, 2 and 3 illustrates MAPE values for the 3 items for the forecasting at 4 different prediction horizons using the deep neural network model of present disclosure comprising attention layer, the deep neural network model of present disclosure comprising RNN layer, and the model disclosed in the patent application 202121009109, respectively.

Table 1

| Item ID | Prediction horizon=10 | Prediction horizon=15 | Prediction horizon=20 | Prediction horizon=25 |
|---------|----------------------|----------------------|----------------------|----------------------|
| Item 1 | 9.48 | 8.74 | 7.4 | 9.5 |
| Item 2 | 11.15 | 10.21 | 10.89 | 9.9 |
| Item 3 | 26.53 | 19.4 | 23.72 | 28.52 |

Table 2

| Item ID | Prediction horizon=10 | Prediction horizon=15 | Prediction horizon=20 | Prediction horizon=25 |
|---|---|---|---|---|
| Item 1 | 9.58 | 12.89 | 6.91 | 8.82 |
| Item 2 | 9.79 | 8.02 | 10.32 | 9.92 |
| Item 3 | 35.12 | 23.38 | 23.71 | 21 |

Table 3

| Item ID | Prediction horizon=10 | Prediction horizon=15 | Prediction horizon=20 | Prediction horizon=25 |
|---|---|---|---|---|
| Item 1 | 12.96 | 12.14 | 9.96 | 15.42 |
| Item 2 | 14.57 | 8.4 | 12.32 | 13.04 |
| Item 3 | 38.36 | 28.26 | 42.42 | 31.5 |

From the tables 1 to 3, it can be observed that the MAPE values are lesser for the deep neural network model of present disclosure (both with attention layer and RNN layer) indicating that they have a higher prediction accuracy. Further, the model complexity is lesser for the deep neural network model of present disclosure since the summary vectors are combined into a feature vector in such a way that the dimensions of the feature vector doesn't increase with the order of seasonality of the time series data.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1.  A processor implemented method, comprising:

    obtaining (202), via one or more hardware processors, a seasonal time series data for a plurality of sequential time steps, wherein the seasonal time series data is divided into a plurality of groups of seasonal lags; and
    training (204), via the one or more hardware processors, a deep neural network architecture using the seasonal time series data, wherein the deep neural network comprises of a) a plurality of encoders, b) a neural network layer and c) a decoder comprising a plurality of sequential decoder units, and wherein training the deep neural network architecture comprises of iteratively performing for each of the plurality of sequential decoder units:

    generating (204a) a plurality of summary vectors pertaining to the plurality of groups of seasonal lags using the plurality of encoders, wherein each of the plurality of summary vectors encodes one or more seasonal correlations among each of the plurality of groups of seasonal lags;
    generating (204b) a feature vector by processing the plurality of summary vectors and a state of a previous decoder unit among the plurality of sequential decoder units using the neural network layer; and
    feeding (204c) the feature vector and previous group of seasonal lags into a current decoder unit among the plurality of sequential decoder units to predict a seasonal time series data at a subsequent time step.

2.  The method as claimed in claim 1, wherein each of the plurality of encoders comprises of a plurality of sequential encoder units, and wherein number of sequential encoder units is determined by an order of seasonality of the seasonal time series data.

3.  The method as claimed in claim 1, wherein the neural network layer is one of: (i) an attention layer and (ii) a Recurrent Neural Network (RNN) layer.

4.  The method as claimed in claim 1, wherein the state of the previous decoder unit among the plurality of sequential decoder units facilitates encoding contextual information in the feature vector.

5.  The method as claimed in claim 1, wherein processing the plurality of summary vectors and a state of the previous decoder unit among the plurality of sequential decoder units using the neural network layer eliminates dependency of the plurality of summary vectors on the order of seasonality.

6.  A system (100), comprising:

    a memory (102) storing instructions;
    one or more communication interfaces (106); and
    one or more hardware processors (104) coupled to the memory (102) via the one or more communication interfaces (106), wherein the one or more hardware processors (104) are configured by the instructions to:

    obtain a seasonal time series data for a plurality of sequential time steps, wherein the seasonal time series data is divided into a plurality of groups of seasonal lags; and
    train a deep neural network architecture using the seasonal time series data, wherein the deep neural network comprises of a) a plurality of encoders, b) a neural network layer and c) a decoder comprising a plurality of sequential decoder units, and wherein training the deep neural network architecture comprises of iteratively performing for each of the plurality of sequential decoder units:
    generate a plurality of summary vectors pertaining to the plurality of groups of seasonal lags using the plurality of encoders, wherein each of the plurality of summary vectors encodes one or more seasonal correlations among each of the plurality of groups of seasonal lags;

generate a feature vector by processing the plurality of summary vectors and a state of a previous decoder unit among the plurality of sequential decoder units using the neural network layer; and

feed the feature vector and previous group of seasonal lags into a current decoder unit among the plurality of sequential decoder units to predict a seasonal time series data at a subsequent time step.

7. The system as claimed in claim 6, wherein each of the plurality of encoders comprises of a plurality of sequential encoder units, and wherein number of sequential encoder units is determined by an order of seasonality of the seasonal time series data.

8. The system as claimed in claim 6, wherein the neural network layer is one of: (i) an attention layer and (ii) a Recurrent Neural Network (RNN) layer.

9. The system as claimed in claim 6, wherein the state of the previous decoder unit among the plurality of sequential decoder units facilitates encoding contextual information in the feature vector.

10. The system as claimed in claim 6, wherein processing the plurality of summary vectors and a state of the previous decoder unit among the plurality of sequential decoder units using the neural network layer eliminates dependency of the plurality of summary vectors on the order of seasonality.

11. One or more non-transitory machine-readable information storage mediums comprising one or more instructions which when executed by one or more hardware processors cause:

obtaining a seasonal time series data for a plurality of sequential time steps, wherein the seasonal time series data is divided into a plurality of groups of seasonal lags; and

training a deep neural network architecture using the seasonal time series data, wherein the deep neural network comprises of a) a plurality of encoders, b) a neural network layer and c) a decoder comprising a plurality of sequential decoder units, and wherein training the deep neural network architecture comprises of iteratively performing for each of the plurality of sequential decoder units:

generating a plurality of summary vectors pertaining to the plurality of groups of seasonal lags using the plurality of encoders, wherein each of the plurality of summary vectors encodes one or more seasonal correlations among each of the plurality of groups of seasonal lags;

generating a feature vector by processing the plurality of summary vectors and a state of a previous decoder unit among the plurality of sequential decoder units using the neural network layer; and

feeding the feature vector and previous group of seasonal lags into a current decoder unit among the plurality of sequential decoder units to predict a seasonal time series data at a subsequent time step.

12. The one or more non-transitory machine-readable information storage mediums as claimed in claim 11, wherein each of the plurality of encoders comprises of a plurality of sequential encoder units, and wherein number of sequential encoder units is determined by an order of seasonality of the seasonal time series data.

13. The one or more non-transitory machine-readable information storage mediums as claimed in claim 11, wherein the neural network layer is one of: (i) an attention layer and (ii) a Recurrent Neural Network (RNN) layer.

14. The one or more non-transitory machine-readable information storage mediums as claimed in claim 11, wherein the state of the previous decoder unit among the plurality of sequential decoder units facilitates encoding contextual information in the feature vector.

15. The one or more non-transitory machine-readable information storage mediums as claimed in claim 11, wherein processing the plurality of summary vectors and a state of the previous decoder unit among the plurality of sequential decoder units using the neural network layer eliminates dependency of the plurality of summary vectors on the order of seasonality.

SYSTEM

100

MEMORY

102

DATABASE

108

HARDWARE

PROCESSOR(S)

104

I/O INTERFACE(S)

106

FIG. 1

200

Obtaining a seasonal time series data for a plurality of sequential time steps, wherein the time series data is divided into a plurality of groups of seasonal lags — 202

Training a deep neural network architecture using the seasonal time series data, wherein the deep neural network comprises of a) a plurality of encoders, b) a neural network layer and c) a decoder comprising a plurality of sequential decoder units, and wherein training the deep neural network architecture comprises of iteratively performing for each of the plurality of decoder units: — 204

generating a plurality of summary vectors pertaining to the plurality of groups of seasonal lags using the plurality of encoders — 204a

generating a feature vector by processing the plurality of summary vectors and a state of a previous decoder unit among the plurality of sequential decoder units using the neural network layer — 204b

feeding the feature vector and previous group of seasonal lags into a current decoder unit among the plurality of sequential decoder units to predict a seasonal time series data at a subsequent time step — 204c

FIG. 2

FIG. 3

FIG. 4

$$g_0 \rightarrow \boxed{\begin{array}{c}\text{Decoder}\\\text{Unit}\end{array}} \xrightarrow{g_1} \boxed{\begin{array}{c}\text{Decoder}\\\text{Unit}\end{array}} \xrightarrow{g_2} \cdots \xrightarrow{g_{(K-2)}} \boxed{\begin{array}{c}\text{Decoder}\\\text{Unit}\end{array}} \xrightarrow{g_{(K-1)}} \boxed{\begin{array}{c}\text{Decoder}\\\text{Unit}\end{array}}$$

Outputs: $y_t$, $y_{t+1}$, $y_{t+k-2}$, $y_{t+k-1}$

Inputs: $f^1$, $f^2$, $f^{k-1}$, $f^k$

$$\begin{bmatrix} x(t) \\ y(t-S) \\ x(t-S) \\ \cdots \\ y(t-iS) \\ x(t-iS) \\ \cdots \\ y(t-LS) \\ x(t-LS) \end{bmatrix} \quad \begin{bmatrix} x(t+1) \\ y(t+1-S) \\ x(t+1-S) \\ \cdots \\ y(t+1-iS) \\ x(t+1-iS) \\ \cdots \\ y(t+1-LS) \\ x(t+1-LS) \end{bmatrix} \quad \begin{bmatrix} x(t+K-2) \\ y(t+K-2-S) \\ x(t+K-2-S) \\ \cdots \\ y(t+K-2-iS) \\ x(t+K-2-iS) \\ \cdots \\ y(t+K-2-LS) \\ x(t+K-2-LS) \end{bmatrix} \quad \begin{bmatrix} x(t+K-1) \\ y(t+K-1-S) \\ x(t+K-1-S) \\ \cdots \\ y(t+K-1-iS) \\ x(t+K-1-iS) \\ \cdots \\ y(t+K-1-LS) \\ x(t+K-1-LS) \end{bmatrix}$$

FIG. 5

Europäisches
Patentamt

European
Patent Office

Office européen
des brevets

# EUROPEAN SEARCH REPORT

**Application Number**

EP 24 19 9622

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AVINASH ACHAR ET AL: "Seasonal Encoder-Decoder Architecture for Forecasting", ARXIV.ORG, CORNELL UNIVERSITY LIBRARY, 201 OLIN LIBRARY CORNELL UNIVERSITY ITHACA, NY 14853, 8 July 2022 (2022-07-08), XP091267603, * abstract; figures 1, 2 * * page 1, column 2 * * page 5 * ----- | 1-15 | INV. G06N3/044 G06N3/0455 |
| X | US 11 593 822 B2 (TATA CONSULTANCY SERVICES LTD [IN]) 28 February 2023 (2023-02-28) * claim 1; figures 1-4 * ----- | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 10 February 2025 | Tidriri, Khaoula |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 19 9622

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2025

| Patent document cited in search report | | Publication date | Patent family member(s) | | Publication date |
|---|---|---|---|---|---|
| US 11593822 | B2 | 28-02-2023 | EP | 4053750 A1 | 07-09-2022 |
| | | | US | 2022327560 A1 | 13-10-2022 |

EPO FORM P0459

**EP 4 550 210 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321074788
- IN 202121009109
- WO 202121009109 A